# EUROPÄISCHE PATENTANMELDUNG

(11) **EP 4 468 773 A1**
(43) Veröffentlichungstag der Anmeldung: **27.11.2024**
(21) Anmeldenummer: 23175774.1
(22) Anmeldetag: 26.05.2023
(51) Int. Cl.: H04W 24/02, H04W 84/00, H04W 84/04

(54) **VERFAHREN UND VORRICHTUNG ZUR KONFIGURATION VON RETRANSMITTERN IN EINEM FUNKNETZWERK**

(71) Anmelder: ise Individuelle Software und Elektronik GmbH, 26122 Oldenburg (DE)
(72) Erfinder: Carsten, Beth, 27801 Dötlingen (DE)
(74) Vertreter: Angerhausen, Christoph

(57) **Zusammenfassung**

Die hier offenbarte Erfindung betrifft ein computerimplementiertes Verfahren, umfassend: Einlesen von Daten, die die Knoten eines Funknetzwerks sowie paarweise diejenigen Knoten als Knotenpaare spezifiziert, die miteinander über Pfade aus weiteren Knoten in dem Funknetzwerk verbunden werden sollen, und Einlesen von gemessenen Signalstärken zwischen Paaren von Knoten des Funknetzwerks, wobei zumindest einige der Knoten des Funknetzwerks eingerichtet sind, als Retransmitter eingehender Signale konfiguriert zu werden; Für jedes der Knotenpaare Ermitteln aller möglichen Pfade aus weiteren Knoten des Funknetzwerks, die die Knoten des Knotenpaares gemäß den eingelesenen Daten verbinden und ausschließlich als Retransmitter konfigurierbare Knoten enthalten; und aus sämtlichen möglichen Pfaden Ermitteln der kleinsten Menge von Retransmitter-Knoten, die für alle Knotenpaare wenigstens eine Verbindung ermöglicht.

## Beschreibung

### TECHNISCHES GEBIET

Die hier offenbarte Erfindung liegt auf dem Gebiet drahtloser Netzwerke und insbesondere der Einrichtung von Retransmittern innerhalb solcher Netzwerke.

### HINTERGRUND

In einem drahtlosen Netzwerk (Funknetzwerk) kommunizieren Geräte mittels Antennen zum Senden und/oder Empfangen von Signalen. Die Sendestärke eines Gerätes (Knoten) ist begrenzt, so dass einige Knoten in dem Netzwerk außerhalb des Sendebereichs anderer Knoten liegen können. Um dennoch eine Verbindung zwischen zwei Knoten zu errichten, die nicht direkt miteinander kommunizieren können, werden üblicherweise Retransmitter (auch: Repeater) eingesetzt, die ein empfangenes Signal erneut versenden und somit weiter entfernten Knoten die Möglichkeit geben, dieses Signal zu empfangen.

Nicht jedes Gerät verfügt über die Eigenschaft, als Retransmitter zu arbeiten. Üblicherweise gilt dies lediglich für einen Teil der Geräte in einem Netzwerk. Um Kosten und auch unnötigen Aufwand an Technik zu vermeiden, wird angestrebt, die Anzahl der Retransmitter in einem Netzwerk möglichst gering zu halten und zugleich Verbindungen zwischen allen Knoten des Netzwerks zu ermöglichen.

### KURZE BESCHREIBUNG DER ZEICHNUNGEN

Figur 1 zeigt ein beispielhaftes Netzwerk mit Knoten und Verbindungen, die durch die Erfindung realisiert werden sollen.
Figur 2 zeigt das Netzwerk aus Figur 1 mit den tatsächlich vorliegenden Signalstärken zwischen den Knoten.
Figur 3 zeigt das Netzwerk der Figuren 1 und 2 mit Geräten, die als Retransmitter konfiguriert wurden.
Figur 4 zeigt ein beispielhaftes Verfahren zum Ermitteln von Retransmittern und zum Konfigurieren einzelner Retransmitter.
Figur 5 zeigt ein beispielhaftes Verfahren zum Bestimmen einer optimalen Menge von Retransmittern.

### AUSFÜHRLICHE BESCHREIBUNG

Ausführungsformen der Erfindung umfassen Verfahren zur automatischen Analyse eines bestehenden Funknetzwerks und zum Konfigurieren des Funknetzwerks. Die Analyse basiert auf Daten, die einerseits eine geforderte Topologie und andererseits eine tatsächliche Topologie des Funknetzwerks definieren. Die geforderte Topologie umfasst die Menge aller Knotenpaare des Netzwerks, die in die Lage versetzt werden sollen, miteinander zu kommunizieren. Die tatsächliche Topologie umfasst die gemessenen Signalstärken aller Knotenpaare des Netzwerks.

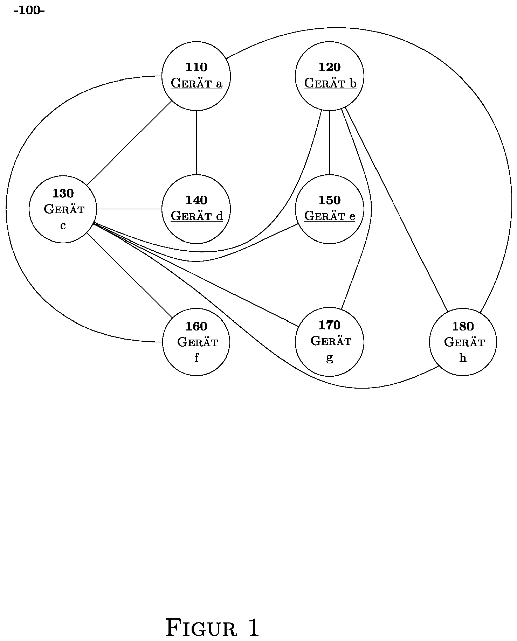

Figur 1 zeigt beispielhaft ein Funknetzwerk 100, das die Knoten a, b, c, d, e, f, g, h mit den Bezugszeichen 110 bis 180 umfasst. Ferner sind durch Verbindungslinien der Knoten die geforderten Paare von Knoten, die miteinander direkt oder auch indirekt kommunizieren sollen, gezeigt. Die Menge dieser Knotenpaare umfasst K = {(a, c), (a, d), (a, f), (a, h), (b, c), (b, e), (b, g), (b, h), (c, d), (c, e), (c, f), (c, g), (c, h)}. Diejenigen Knoten, die Retransmitter-Funktionalität umfassen und demzufolge als Retransmitter konfiguriert werden können, sind in Figur 1 unterstrichen und umfassen die Knoten a, b, d und e.

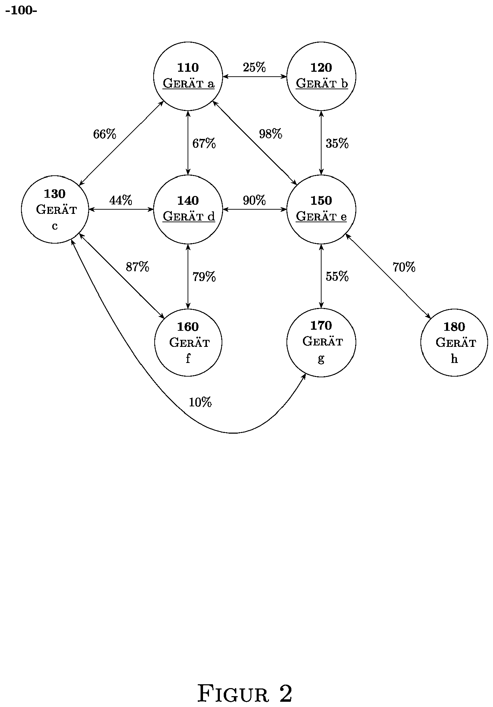

Figur 2 zeigt das Funknetzwerk 100 mit einer Darstellung der Knoten und den gemessenen Signalstärken zwischen den Knoten. Nicht gemessene oder vernachlässigbar geringe Signalstärken sind nicht gezeigt und entsprechende Kanten (Verbindungslinien) zwischen solchen Knoten wurden in der Figur 2 weggelassen. Das Funknetzwerk 100 ist als gerichteter Graph gezeigt, da die gemessenen Signalstärken zwischen zwei Knoten in jeder der beiden Richtungen unterschiedlich sein können. In der gezeigten Form wird vereinfachend angenommen, dass die Signalstärken in beiden Richtungen identisch sind; jedoch umfasst die Erfindung auch Ausführungsformen, in denen unterschiedliche Signalstärken gemessen werden. Um die Signalstärken in jede Richtung zwischen zwei Knoten A und B zu messen, wird am Knoten A die Signalstärke von Knoten B gemessen und am Knoten B die Signalstärke von Knoten A.

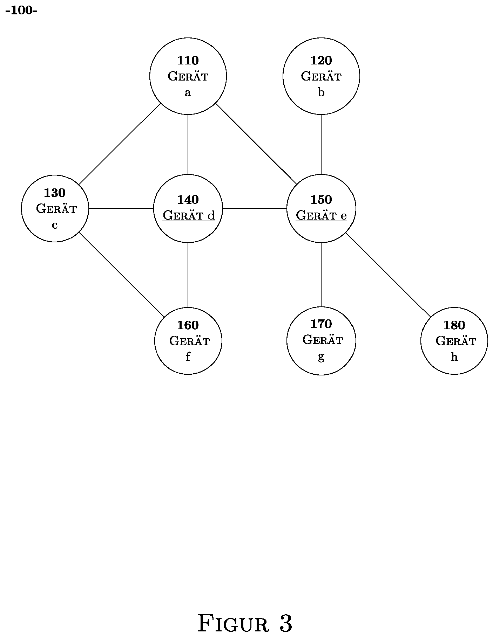

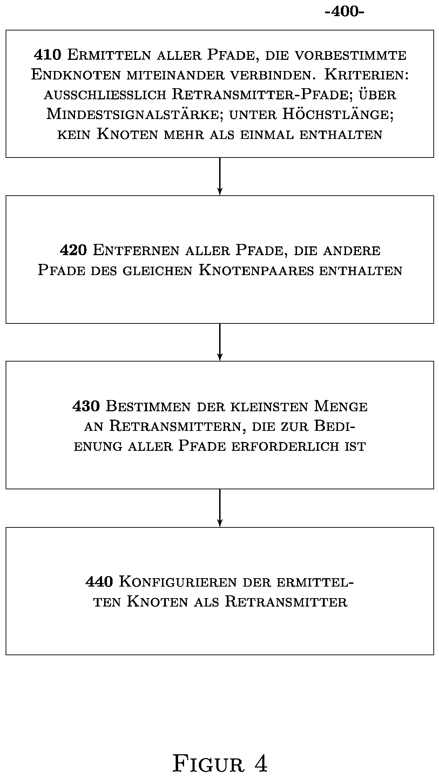

Figur 3 zeigt ein Ergebnis einer automatischen Analyse des Funknetzwerks 100 mit den letztlich als Retransmitter konfigurierten Knoten, hier den Knoten d und e. Dieses Ergebnis wird mit dem in Figur 4 gezeigten Verfahren 400 erzielt.

In einem ersten Schritt 410 ermittelt das Verfahren sämtliche Pfade, deren Endknoten in der Menge der Knotenpaare K enthalten sind und die neben diesen Endknoten ausschließlich Retransmitter enthalten. Ferner soll in allen Pfaden die Signalstärke für jedes Paar von Knoten, die in einem Pfad aufeinander folgen, einen vorbestimmten Schwellwert überschreiten. Ferner soll jeder Pfad neben den Endknoten höchstens eine vorbestimmte Anzahl von Retransmittern enthalten. Kein Knoten ist in einem Pfad mehr als einmal enthalten. Für Endknoten, zwischen denen die geforderte Signalstärke bereits vorliegt, wird der Verfahrensschritt nicht durchgeführt, da diese direkt miteinander kommunizieren können und keinerlei Vermittlung durch Retransmitter bedürfen; somit werden Pfade mit einer Länge von zwei Knoten - den Endknoten - nicht beachtet.

Die Bedingung, dass die Pfade neben den Endknoten ausschließlich Retransmitter enthalten, ist erforderlich, da nur Retransmitter in der Lage sind, Signale weiterzuleiten oder erneut zu senden. Die Bedingung einer Mindestsignalstärke für sämtliche Abschnitte in einem Pfad gewährleistet, dass auch bei längeren Pfaden eine bestimmte Übertragungsqualität erreicht wird. Die Bedingung einer maximalen Anzahl von Retransmittern in jedem Pfad stellt eine schnelle Übertragung sicher, da jeder Retransmitter eine bestimmte Zeit benötigt, um Signale weiterzuleiten. Bei mehreren Retransmittern in einem Pfad addieren sich diese Verzögerungen. Die Bedingung, keinen Knoten in einem Pfad mehrfach aufzunehmen, dient der Vermeidung zyklischer Graphen und letztlich ebenfalls einer zuverlässigen Übertragung.

In einer Ausführungsform liegen sowohl die Signalstärken als auch der Schwellwert als Prozentangabe einer maximal möglichen jeweiligen Signalstärke vor. Liegt der vorbestimmte Schwellwert bei 30% und die vorbestimmte Anzahl von Retransmittern bei 2, so liefert Schritt 410 für das in Figur 2 gezeigte Netzwerk die folgenden Pfade. Da im vorliegenden Beispiel für jede Richtung zwischen den Knotenpaaren gleiche Signalstärken angenommen werden, führen die Tabellen aus Gründen der Lesbarkeit jedes Knotenpaar lediglich in einer von zwei möglichen Reihenfolgen auf. Jedoch umfassen Ausführungsformen der Erfindung auch eine Unterscheidung zwischen Pfaden, die die gleichen Retransmitter in unterschiedlichen Reihenfolgen umfassen. Dies trägt der Beobachtung Rechnung, dass die Signalstärken zwischen zwei Retransmittern in jeder Richtung unterschiedlich sein können.

**Tabelle 1**

| Knotenpaar | Pfade |
|---|---|
| a, f | (a, d, f), (a, e, d, f) |
| a, h | (a, e, h), (a, d, e, h) |
| b, c | (b, e, d, c) |
| b, g | (b, e, g) |
| b, h | (b, e, h) |
| c, e | (c, d, e), (c, a, e) |
| c, g | (c, d, e, g), (c, a, e, g) |
| c, h | (c, d, e, h), (c, a, e, h) |

Aus der Menge der Pfade werden in einem weiteren Schritt 420 diejenigen Pfade entfernt, die die Knoten eines anderen Pfades vollständig enthalten. So wird aus den Pfaden für das Knotenpaar (a, f) der Pfad (a, e, d, f) entfernt, da dieser die Knoten des Pfades (a, d, f) enthält, und für das Knotenpaar (a, h) wird der Pfad (a, d, e, h) entfernt, da dieser sämtliche Knoten des Pfades (a, e, h) enthält. Das Ergebnis dieses Schritts wird durch die folgende Tabelle wiedergegeben.

**Tabelle 2**

| Knotenpaar | Pfade |
|---|---|
| a, f | (a, d, f) |
| a, h | (a, e, h) |
| b, c | (b, e, d, c) |
| b, g | (b, e, g) |
| b, h | (b, e, h) |
| c, e | (c, d, e), (c, a, e) |
| c, g | (c, d, e, g), (c, a, e, g) |
| c, h | (c, d, e, h), (c, a, e, h) |

Alternativ oder zusätzlich können diejenigen Pfade entfernt werden, die die geringsten Signalstärken aufweisen; demnach würde für das Knotenpaar (a, f) der Pfad (a, d, f) entfernt werden, da die Signalstärke 0,67^{∗}0.79=0,53 für den Pfad (a, d, f) geringer ist als die Signalstärke 0,98^{∗}0,9^{∗}0,79=0.7 für den Pfad (a, e, d, f), und für das Knotenpaar (a, h) würde der Pfad (a, d, e, h) entfernt werden, da dessen Signalstärke 0,67^{∗}0,9^{∗}0,7=0,42 geringer ist als die Signalstärke 0,98^{∗}0,70=0,69. Das Signalstärke-basierende Entfernen von Pfaden kann in einer Ausführungsform für jedes Knotenpaar wiederholt ausgeführt werden, bis je Knotenpaar nur noch ein Pfad verbleibt. Signalstärke-basierendes Entfernen eignet sich insbesondere für einfache Netzwerktopologien. Alternativ kann diese Maßnahme lediglich dann durchgeführt werden, wenn ein Pfad die Knoten eines anderen Pfades enthält. Werden die Pfade anhand ihrer Signalstärke bis auf einen Pfad je Knotenpaar reduziert, reduziert sich im vorliegenden Beispiel die Anzahl von 13 Pfaden auf 8 Pfade. Diese acht Pfade wären (a, e, d, f), (a, e, h), (b, e, d, c), (b, e, g), (b, e, h), (c, a, e), (c, a, e, g), (c, a, e, h). Werden hingegen lediglich diejenigen Pfade entfernt, die die Knoten eines anderen Pfades (für dieses Knotenpaar) enthalten, so reduziert sich im vorliegenden Beispiel die Anzahl von 13 Pfaden auf die in der obigen Tabelle gezeigten 11 Pfade.

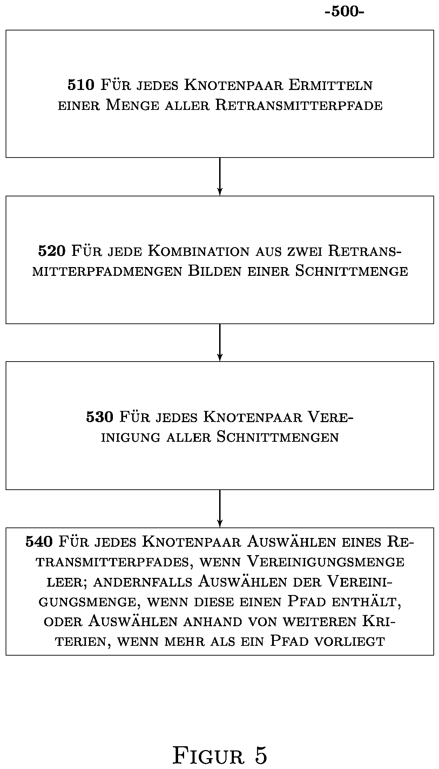

In einem weiteren Schritt 430 wird nach der kleinstmöglichen Menge der Retransmitter a, b, d, e gesucht, die erforderlich ist, um sämtliche verbleibenden Pfade zu betreiben. In dem angeführten Beispiel mit 11 Pfaden liegen für die ersten fünf Knotenpaare (a, f), (a, h), (b, c), (b, g), (b, h) jeweils nur ein Pfad vor. Diese Pfade enthalten die Retransmitter d und e. Mit diesen Retransmittern werden auch die übrigen Pfade der Knotenpaare (c, e), (c, g) und (c, h) abgedeckt, so dass als Ergebnis die Retransmittermenge {d, e} verbleibt. Somit entfallen die Pfade (c, a, e), (c, a, e, g) und (c, a, e, h) zugunsten der Alternativen (c, d, e), (c, d, e, g), und (c, d, e, h). Dieses Ergebnis ist in Figur 3 dargestellt, in der die als Retransmitter konfigurierten Knoten unterstrichen dargestellt sind. Ein Beispiel für eine Implementation des Schritts 430 wird weiter unten unter Bezugnahme auf Figur 5 erläutert.

Das Verfahren 400 endet mit Schritt 440, der die in Schritt 430 ermittelten Knoten als Retransmitter konfiguriert. Dies kann beispielsweise durch Versenden bestimmter Befehle an die betroffenen Knoten erfolgen. Die Befehle werden dort jeweils ausgeführt mit der Wirkung, dass die Knoten als Retransmitter arbeiten.

Figur 5 zeigt ein beispielhaftes Verfahren 500 zur Ermittlung der kleinsten Menge an Retransmittern, die zum Betrieb sämtlicher Pfade erforderlich ist. Das Verfahren 500 stellt lediglich ein Beispiel dar, und kann durch alternative Verfahren ersetzt werden.

Figur 5 zeigt als ersten Schritt 510 die Betrachtung jedes Knotenpaares, beispielsweise der Knotenpaare (a, f), (a, h), (b, c), (b, g), (b, h), (c, e), (c, g) und (c, h). Für jedes dieser Knotenpaare wird eine Menge aus Pfaden von Retransmittern gebildet, die dieses Knotenpaar verbinden können. Diese Mengen können beispielsweise aus der oben gezeigten Tabelle 2 ausgelesen werden. Im vorliegenden Beispiel wären dies die Mengen A:{d}, B:{e}, C:{(e, d)}, D:{e}, E:{e}, F:{d, a}, G:{(d, e), (a, e)} und H: f (d, e), (a, e)}.

**Tabelle 3**

| Knotenpaar | Mengenbezeichner | Retransmitterpfade |
|---|---|---|
| a, f | A | {d} |
| a, h | B | {e} |
| b, c | C | {(e, d)} |
| b, g | D | {e} |
| b, h | E | {e} |
| c, e | F | {(d, e), (c, a)} |
| c, g | G | {(d, e), (a, e)} |
| c, h | H | {(d, e), (a, e)} |

In Schritt 520 wird für jede Kombination aus zwei dieser Retransmitterpfadmengen die Schnittmenge gebildet; abweichend von der mathematischen Konvention wird hierbei der längere von zwei Pfaden in die Schnittmenge aufgenommen, wenn einer der Pfade einer Retransmitterpfadmenge lediglich teilweise in einem Pfad einer anderen Retransmitterpfadmenge enthalten ist. Beispielsweise lautet die Schnittmenge A UND C = {(d)} UND {(e, d)} = {(e, d)}. Im vorliegenden Beispiel ergeben sich die folgenden Schnittmengen.

**Tabelle 4**

| ∩ | A | B | C | D | E | F | G | H |
|---|---|---|---|---|---|---|---|---|
| A | | ø | (e, d) | ø | ø | (d) | (d, e) | (d, e) |
| B | | | (e, d) | (e) | (e) | ø | (d, e), (a, e) | (d, e) |
| C | | | | (e, d) | (e, d) | (e, d) | (d, e) | (d, e) |
| D | | | | | (e) | ø | (d, e), (a, e) | (d, e), (a, e) |
| E | | | | | | ø | (d, e), (a, e) | (d, e), (a, e) |
| F | | | | | | | (d, e), (a, e) | (d, e), (a, e) |
| G | | | | | | | | (d, e), (a, e) |

In Schritt 530 wird für jede Zeile, also für jedes Knotenpaar, die Vereinigung aller Schnittmengen gebildet und in Schritt 540 untersucht. Ist die Vereinigungsmenge leer, gibt es offenbar keine Pfade des Knotenpaars, dem diese Zeile entspricht, die auch andere Knotenpaare verbinden; für das betreffende Knotenpaar dieser Zeile kann ein beliebiger der vorliegenden Pfade ausgewählt werden, beispielsweise der Pfade mit der höchsten Signalstärke.

Enthält die Ergebnismenge genau einen Pfad, so wird dieser ausgewählt.

Enthält die Ergebnismenge mehr als einen Pfad, so wird derjenige Pfad ausgewählt, der in dieser Zeile am häufigsten vorkommt, da dieser Pfad die größte Redundanz mit anderen Pfadmengen und somit die höchste Abdeckung (höchste Anzahl an Knotenpaaren, die mit diesem Pfad verbunden werden können) bietet. Liegt die größte Häufigkeit bei mehreren Pfaden vor, so wird geprüft, ob einer dieser Pfade bereits ausgewählt wurde; ansonsten kann auch hier derjenige Pfad mit der besten Signalstärke ausgewählt werden.

Im vorliegenden Beispiel ist die Vereinigung bei keiner der Zeilen in Tabelle 4 leer. Genau ein Pfad liegt beispielsweise für die Schnittmengen von A vor, (d, e); die Retransmitter e und d werden ohne weiteres ausgewählt. Mehrere Pfade mit unterschiedlichen Häufigkeiten liegen für die Schnittmenge B vor, nämlich (e, d) und (a, e); hier kommt der Pfad (e, d) dreimal vor, der Pfad (a, e) jedoch nur einmal, so dass die Retransmitter e und d ausgewählt werden; am Ergebnis ändert sich nichts, da diese Retransmitter bereits ausgewählt sind. Mehrere Pfade mit gleicher Häufigkeit sind beispielsweise für die Schnittmenge D enthalten, nämlich (d, e) und (a, e) jeweils zweimal. Da (d, e) bereits ausgewählt ist, ändert sich an den ausgewählten Retransmittern nichts. Im Ergebnis bleibt es bei den Retransmittern d und e, die ausgewählt und aktiviert werden und sämtliche Knotenpaare und abdecken.

Das Verfahren 500 endet, wenn sämtliche Knotenpaare beziehungsweise deren Schnittmengen mit anderen Knotenpaaren betrachtet wurden und die endgültige Retransmittermenge zur Aktivierung ermittelt wurde.

In einer Ausführungsform umfasst das Konfigurieren von Retransmitterknoten in Schritt 440 des Verfahrens 400, diese Knoten so zu konfigurieren, dass sie lediglich solche Signale verstärken oder erneut senden oder weiterleiten, die an einen Knoten in einem Pfad gerichtet sind, zu dem der Retransmitterknoten gehört. In diesem Fall erfasst der Retransmitterknoten ein eingehendes Signal und prüft zunächst den Zielknoten dieses Signals. Alternativ können Retransmitterknoten auch zur Verstärkung sämtlicher Signale konfiguriert werden.

In einer Ausführungsform liegen die oben erwähnten Datenstrukturen in Form einer oder mehrerer Listen oder Tabellen vor. Insbesondere können diese Datenstrukturen anhand eines Knotenbezeichners, Pfadbezeichners und/oder weiterer Eigenschaften, beispielsweise der Pfadlänge, durchsucht werden.

In den bisher beschriebenen Ausführungsformen betreffen die gemessenen Signalstärken pauschal die zwischen zwei Knoten gemessene Signalstärke. Beispielsweise kann die Signalstärke eines der beiden Knoten an dem jeweils anderen Knoten gemessen werden und die beiden Werte gemittelt oder der kleinere Wert verwendet werden, um die gemessene Signalstärke zwischen den beiden Knoten zu erhalten. In einer alternativen Ausführungsform werden die Signalstärken eines Knotens an jedem anderen Knoten gemessen, so dass eine Matrix aus Signalstärken - prozentual oder absolut - entsteht. Wird anhand dieser Signalstärken eine mögliche Verbindung zwischen zwei Knoten geprüft, so liegen zwei Signalstärken vor, nämlich eine Signalstärke in jeder Richtung. In den oben beschriebenen Schritten, die die Signalstärken verwenden, beispielsweise Schritt 410 in Verfahren 400 oder Schritt 530 in Verfahren 500, muss dann das jeweilige Kriterium (Signalstärke überschreitet Schwellwert) entweder für jede der beiden Signalstärken oder für einen Mittelwert beziehungsweise das Produkt beider Werte erfüllt sein.

In einer weiteren Ausführungsform kann das Verfahren 400 automatisch wiederholt werden, wenn sich die Topologie oder die Signalstärken ändern. Zu diesem Zweck erfasst die Erfindung sämtliche Signalstärken in einer Datenstruktur und prüft regelmäßig oder anhand eines Ereignisses, beispielsweise auf Befehl oder bei Ausbleiben von Signalen an einem oder mehreren Knoten für einen vorbestimmten Zeitraum, ob die Signalstärken von den gespeicherten Werten abweichen. Hierzu werden entweder sämtliche oder lediglich spezifizierte oder lokal relevante Signalstärken erneut gemessen und mit den gespeicherten Werten verglichen. Überschreitet die Abweichung wenigstens einer der neu gemessenen Signalstärken den oder die alten Werte, wird das Verfahren 400 wiederholt. Auf diese Weise passt die Erfindung die Retransmitter des Funknetzwerks dynamisch an eine sich änderte Topologie des Funknetzwerks oder auch an geänderte Signalbedingungen an.

Eine weitere Ausführungsform umfasst, bei der Wiederholung von Signalmessungen frühere Signalmessungen weiter vorzuhalten. Der oben beschriebene Schritt 410 oder Schritt 530 kann dann ergänzt werden um eine Prüfung, ob das jeweilige Kriterium (Signalstärke überschreitet Schwellwert) auch für frühere Signale gilt. Auf diese Weise beugt die Erfindung der Möglichkeit vor, dass ein früher Messwert, der einen Schwellwert unterschritt oder ein Kriterium auf andere Weise verletzte, nicht erneut auftritt und die Kommunikation zwischen den betreffenden Knoten beeinträchtigt.

Eine weitere Ausführungsform eines Verfahrens zur Bestimmung einer optimalen Retransmittermenge umfasst einen ersten Schritt, in dem die Menge aller Retransmitter bestimmt wird, die in den Retransmitterpfaden (beispielsweise in Tabelle 1 gezeigt) enthalten sind. In einem zweiten Schritt werden aus diesen Retransmitterpfaden sämtliche Kombinationen gebildet, wobei jede Kombination einen Pfad mit einer vorgegebenen maximalen Länge darstellt. Anschließend wird in einem dritten Schritt für jeden der Pfade gezählt, wieviele der Knotenpaare (Tabelle 1) durch diesen Pfad abgedeckt werden. Zuletzt wird derjenige Pfad ausgewählt, dessen Retransmitter die meisten Knotenpaare abdeckt; deckt dieser Pfad nicht sämtliche Knotenpaare ab, werden weitere Pfade hinzugenommen, die die fehlenden Knotenpaare abdecken.

## Patentansprüche

1. Computerimplementiertes Verfahren, umfassend:
Einlesen von Daten, die die Knoten eines Funknetzwerks sowie paarweise diejenigen Knoten als Knotenpaare spezifiziert, die miteinander über Pfade aus weiteren Knoten in dem Funknetzwerk verbunden werden sollen, und Einlesen von gemessenen Signalstärken zwischen Paaren von Knoten des Funknetzwerks, wobei zumindest einige der Knoten des Funknetzwerks eingerichtet sind, als Retransmitter eingehender Signale konfiguriert zu werden;
Für jedes der Knotenpaare Ermitteln aller möglichen Pfade aus weiteren Knoten des Funknetzwerks, die die Knoten des Knotenpaares gemäß den eingelesenen Daten verbinden und ausschließlich als Retransmitter konfigurierbare Knoten enthalten, wobei jeder der möglichen Pfade eine vorbestimmte Mindestsignalstärke aufweist und eine vorbestimmte größte Anzahl von Knoten nicht überschreitet sowie keinen Knoten mehr als einmal enthält und nicht lediglich aus den Knoten des Knotenpaares besteht;
Entfernen aller Pfade aus den möglichen Pfaden, die einen anderen Pfad der möglichen Pfade vollständig enthalten; und
Aus sämtlichen möglichen Pfaden Ermitteln der kleinsten Menge von Retransmitter-Knoten, die für alle Knotenpaare wenigstens eine Verbindung ermöglicht; und
Konfigurieren der Retransmitter-Knoten in der kleinsten Menge zum Weiterleiten oder erneuten Versenden von eintreffenden Daten.

2. Verfahren nach Anspruch 1, wobei die Mindestsignalstärke und die gemessenen Signalstärken als Prozentangabe einer maximal möglichen Signalstärke angegeben sind, und wobei die Prüfung, ob jeder der möglichen Pfade eine vorbestimmte Mindestsignalstärke aufweist, umfasst, zu prüfen, ob jede der gemessenen Signalstärken zwischen zwei aufeinanderfolgenden Knoten in dem Pfad über der Mindestsignalstärke liegt.

3. Verfahren nach Anspruch 1, wobei die Mindestsignalstärke und die gemessenen Signalstärken als absolute Werte angegeben sind, und wobei die Prüfung, ob jeder der möglichen Pfade eine vorbestimmte Mindestsignalstärke aufweist, umfasst, zu prüfen, ob jede der gemessenen Signalstärken zwischen zwei aufeinanderfolgenden Knoten in dem Pfad über der Mindestsignalstärke liegt.

4. Verfahren nach Anspruch 1 oder 2, wobei das Konfigurieren der Retransmitter-Knoten umfasst, diese lediglich zum Weiterleiten oder erneuten Versenden derjenigen eintreffenden Daten zu konfigurieren, die an einen Knoten in einem Pfad gerichtet ist, der den Retransmitter-Knoten enthält.

5. Verfahren nach einem der vorstehenden Ansprüche, wobei die Daten Angaben darüber enthalten, ob ein Knoten als Retransmitter konfiguriert werden kann.

6. Verfahren nach einem der vorstehenden Ansprüche, ferner umfassend Ermitteln der gemessenen Signalstärken durch Messen einer Signalstärke jedes Knotens an jedem anderen Konten, wobei das Ermitteln aller möglichen Pfade umfasst, die Mindestsignalstärke mit sämtlichen gemessenen Signalstärken eines Pfades zu vergleichen.

7. Verfahren nach einem der vorstehenden Ansprüche, ferner Wiederholen der Verfahrensschritte, wenn wenigstens eine der Signalstärken unter die Mindestsignalstärke gefallen ist.

8. Verfahren nach einem der vorstehenden Ansprüche, wobei das Ermitteln der kleinsten Menge von Retransmitter-Knoten umfasst:
Für jedes Knotenpaar Zusammenstellen einer Menge der möglichen Pfade für dieses Knotenpaar;
Für jede Kombination aus zwei Mengen der möglichen Pfade aller Knotenpaare Bilden einer Schnittmenge;
Vereinigung aller Schnittmengen; und
Für jede der Mengen, die mit den anderen Mengen ausschließlich leere Schnittmengen bildet, Auswahl eines einzelnen Pfades dieser Menge, und Vereinigung dieses Pfades mit den vereinigten Schnittmengen.

9. Verfahren nach Anspruch 8, wobei die Auswahl eines einzelnen Pfades der Menge auf den gemessenen Signalstärken der Pfade dieser Menge basiert, wobei der Pfad mit der höchsten gemessenen Signalstärke gewählt wird.

10. Computerlesbares Medium mit darauf gespeicherten Befehlen, die, wenn sie durch einen Prozessor ausgeführt werden, das Verfahren nach einem der vorstehenden Ansprüche durchführen.

11. Computervorrichtung, die eingerichtet ist, das Verfahren nach einem der Ansprüche 1 bis 8 durchzuführen.
